# EUROPÄISCHE PATENTSCHRIFT

(11) **EP 2 546 162 B1**
(45) Veröffentlichungstag und Bekanntmachung des Hinweises auf die Patenterteilung: **06.05.2015**
(21) Anmeldenummer: 12175257.0
(22) Anmeldetag: 06.07.2012
(51) Int. Cl.: B65D 19/38, B65D 19/44

(54) **Palette zum Transport von Rund- oder Schnittholz**
Palette for transporting round or trimmed timber
Palette pour le transport de bois rond et de bois de coupe

(30) Priorität: 12.07.2011 AT 10182011
(43) Veröffentlichungstag der Anmeldung: 16.01.2013
(73) Patentinhaber: Wanek-Pusset, Peter, 8605 Kapfenberg (AT); Grentner, Bernhard, 8614 Breitenau (AT)
(72) Erfinder: Wanek-Pusset, Peter, 8605 Kapfenberg (AT); Grentner, Bernhard, 8614 Breitenau (AT)
(74) Vertreter: Vinazzer, Edith

(56) Entgegenhaltungen:
- EP-A2- 1 690 809
- EP-B1- 1 728 729

## Beschreibung

Die Erfindung betrifft eine Palette zum Transport von Rund- oder Schnittholz auf Eisenbahnwagen für den Containertransport, mit einem formstabilen Rahmen aus Längsund Querträgern aus Stahlprofilen und mit an den Eckbereichen des Rahmens angeordneten, aufrecht stehenden, aus Stahlprofilen gefertigten Rungen.

Eine derartige Palette ist beispielsweise aus der EP-B 1 728 729 bekannt. Im beladenen Zustand wird die Palette mit dem Holz über Spanngurten verbunden, wobei zum Umschlagen der beladenen Palette mittels eines Gabelstaplers die Gabelzinken unterhalb des Holzes eingefädelt werden und unmittelbar das Holz erfassen. Die eigentliche Tragefunktion bei beladener Palette übernimmt daher das Ladegut, das Rund- oder Schnittholz.

Das Rundholz, das in Sägewerken nicht verarbeitet werden kann, wird zu einem großen Teil zur Papier- oder Zellstoffindustrie geliefert. Dieses Rundholz hat ein relativ niedriges spezifisches Gewicht, welches meist nicht ausreicht, um bei beladenen Paletten die Eisenbahnwagen wunschgemäß an deren Lastgrenze auszulasten, sodass die Transportkosten unnötig erhöht sind.

Es ist erforderlich, die Transportvorrichtungen im Eisenbahngüterverkehr, wie beispielsweise mit Rungen versehene Paletten oder Container, normgerecht - nach nationalen und internationalen Normen - auszuführen. So ist es beispielsweise üblich, Paletten mit Rungen gemäß dem für den Bahntransport standardisierten internationalen Lademaß G1 für Eisenbahntransporte auszuführen. Die Abmessungen der intermodalen Ladeeinheiten sind in der UIC Richtlinie 596-6 definiert.

Der Erfindung liegt die Aufgabe zugrunde, eine Palette der eingangs genannten Art normgerecht mit einem höheren Ladequerschnitt zur Verfügung zu stellen, um Rundholz mit geringerem spezifischen Gewicht auf Eisenbahnwagen unter Ausnützung der Lastgrenze transportieren zu können.

Gelöst wird die gestellte Aufgabe erfindungsgemäß dadurch, dass sich die paarweise jedem Querträger zugeordneten Rungen aus unteren und oberen, über eine Kröpfung verbundenen Rungenabschnitten zusammensetzen, wodurch die oberen Rungenabschnitte gegenüber den unteren Rungenabschnitten in Richtung Querträgermitte versetzt sind, derart, dass die beiden paarweise einander zugeordneten unteren Rungenabschnitte gemäß dem internationalen Lademaß G1 und die beiden paarweise einander zugeordneten oberen Rungenabschnitte gemäß der internationalen Richtlinie UIC 596-6 verlaufen.

Durch diese einfachen Maßnahmen kann bei einer normgerechten Ausführung des Ladequerschnittes das Ladevolumen bzw. die Ladekapazität der Palette deutlich erhöht werden, insbesondere in der Größenordnung von 20 %, gegenüber Paletten mit herkömmlichen Rungen. Mit erfindungsgemäß ausgeführten Paletten ist es daher möglich, Rundholz mit geringerem spezifischem Gewicht bei maximaler Ausnutzung der Lastgrenze auf Eisenbahnwagen zu transportieren.

Die Abmessungen der Rungen können innerhalb der vorgegebenen maximalen Abmessungen variiert werden. Um das mögliche Ladevolumen gut auszunützen ist es vorteilhaft, wenn die Rungen eine Gesamthöhe in senkrechter Richtung, zwischen der Oberkante des Querträgers und der Rungenspitze ermittelt, aufweisen, welche 2660 mm +/- 200 mm beträgt. Der parallel zum Querträger ermittelte Versatz des oberen Rungenabschnittes zum unteren Rungenabschnitt sollte mindestens 90 mm betragen. Die Rungen können derart ausgeführt sein, dass der obere Rungenabschnitt mitsamt der Kröpfung als ein Teil ausgeführt ist, welcher mit dem unteren Rungenabschnitt fest verbunden ist. Alternativ können die Rungen einteilig ausgeführt sein und aus miteinander verschweißten Stahlprofilen bestehen.

Maximale Ladekapazität lässt sich insbesondere mit einer Ausführung erzielen, bei der die unteren Rungenabschnitte der paarweise einem Querträger zugeordneten Rungen gemäß dem internationalen Lademaß G1 derart verlaufen, dass die maximale Breite der Palette im Bereich der unteren Enden der unteren Rungenabschnitte 2.970 mm beträgt, wobei diese Breite bis in eine Höhe von 3.175 mm über der Schienenoberkante gilt. Die oberen Rungenabschnitte der paarweise einem Querträger zugeordneten Rungen verlaufen gemäß der UIC Richtlinie 596-6 derart, dass die maximale Breite im Bereich der oberen Eckpunkte der Rungenabschnitte 2.600 mm beträgt

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Schrägansicht einer Palette zum Beladen mit Rund- oder Schnittholz mit einer Ausführungsvariante von Rungen,
Fig. 2 eine Frontansicht der Palette aus Fig.1,
Fig. 3 eine Seitenansicht der Palette aus Fig. 1,
Fig. 4 eine Draufsicht auf die Palette gemäß Fig. 1,
Fig. 5 das Detail B aus Fig. 3 in vergrößerter Darstellung,
Fig. 6 die Palette auf einem Eisenbahnwagen für Containertransport und
Fig. 7 das Detail E aus Fig. 6 in vergrößerter Darstellung

Die in der nachfolgenden Beschreibung mit der Bezeichnung "längs" versehenen Bauteile der Palette 1 verlaufen, wenn die Palette 1 auf einem Eisenbahnwagen montiert ist, in Längsrichtung desselben, die mit der Bezeichnung "quer" versehenen Bauteile der Palette 1 demnach in Querrichtung des Eisenbahnwagens.

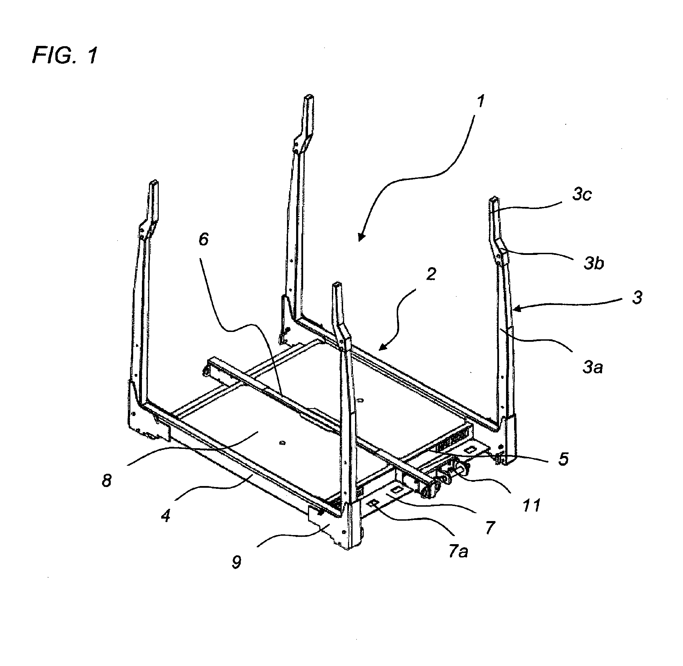

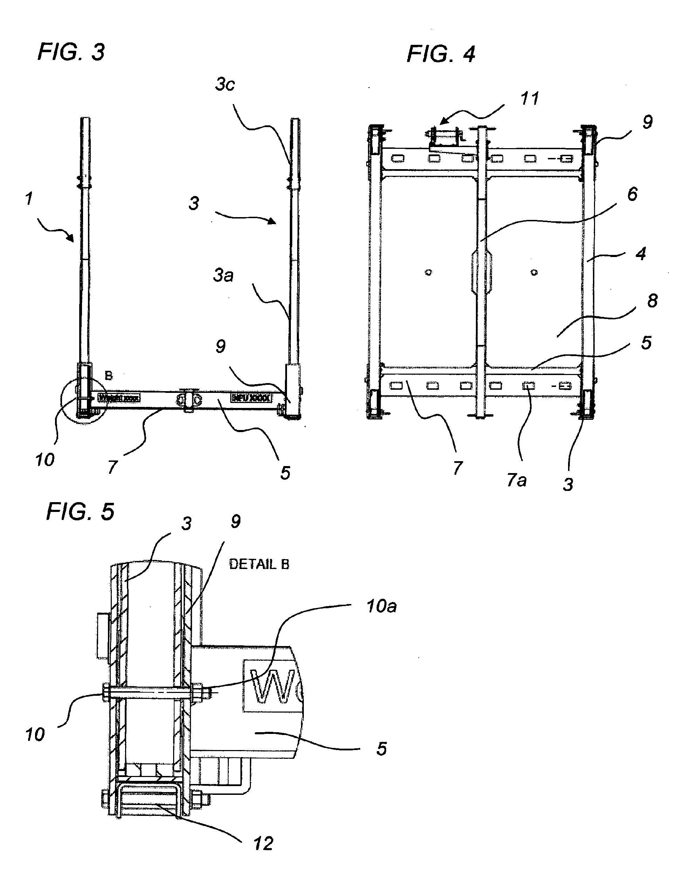

Die in den Figuren gezeigte Palette 1 besteht im Wesentlichen aus einem Basisteil 2 und vier aufrecht stehenden Rungen 3. Der Basisteil 2 weist einen äußeren, rechteckigen Rahmen aus zwei Querträgern 4 und zwei Längsträgern 5 auf. Die beiden Längsträger 5 sind mittig mit einem weiteren mittleren Querträger 6 verbunden. Längs- und Querträger 4, 5, 6 sind miteinander verschweißte Stahlprofile, wobei die Querträger 4, 6 mit ihren Endabschnitten die Längsträger 5 überragen. An den Außenseiten der Längsträger 5 sind Stahlblechstreifen 7 angeschweißt, die jeweils mit einer Anzahl, insbesondere sechs, in gleichen Abständen zueinander angeordneten Aufnahmeöffnungen 7a für an einem Eisenbahnwagen, welcher für den Containertransport vorgesehen ist, angeordnete Containerzapfen, die nicht dargestellt sind, versehen sind, um die Palette 1 in entsprechenden Positionen am Eisenbahnwagen positionieren zu können. In dem von den Quer- und Längsträgern 4, 5 gebildeten Rahmen ist eine Stahlblechplatte 8 angeordnet, welche mit den Quer- und Längsträgern 4, 5, 6 verschweißt ist und den Ladeboden der Palette 1 bildet. An den die Längsträger 5 überragenden Endabschnitten der Querträger 4 sind Rungenschuhe 9 angeschweißt, welche derart ausgebildet sind, dass sie jeweils einerseits eine dem Rungenprofil angepasste Aufnahme für die Runge 3 bilden und andererseits die eingesetzte Runge 3 zumindest an drei Seiten gut abstützen. Wie insbesondere Fig. 3 und 5 zeigen, ist die in den Rungenschuh 9 eingesetzte Runge 4 zusätzlich mit einer Schraube 10 mittels einer festgezogenen Mutter 10a am Rungenschuh 9 gesichert. Fig. 1 und Fig. 4 zeigen ferner eine an dem einen überstehenden Endabschnitt des mittleren Querträgers 6 angeordnete Winde 11, die in an sich bekannter Weise zum Aufwickeln und Spannen einer das Ladegut sichernden Gurte, die nicht dargestellt ist, vorgesehen ist.

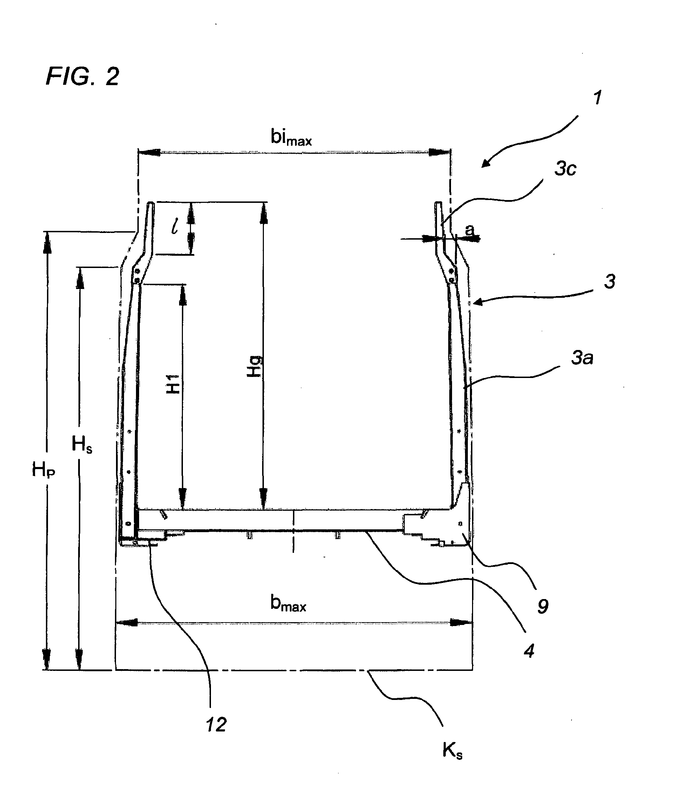

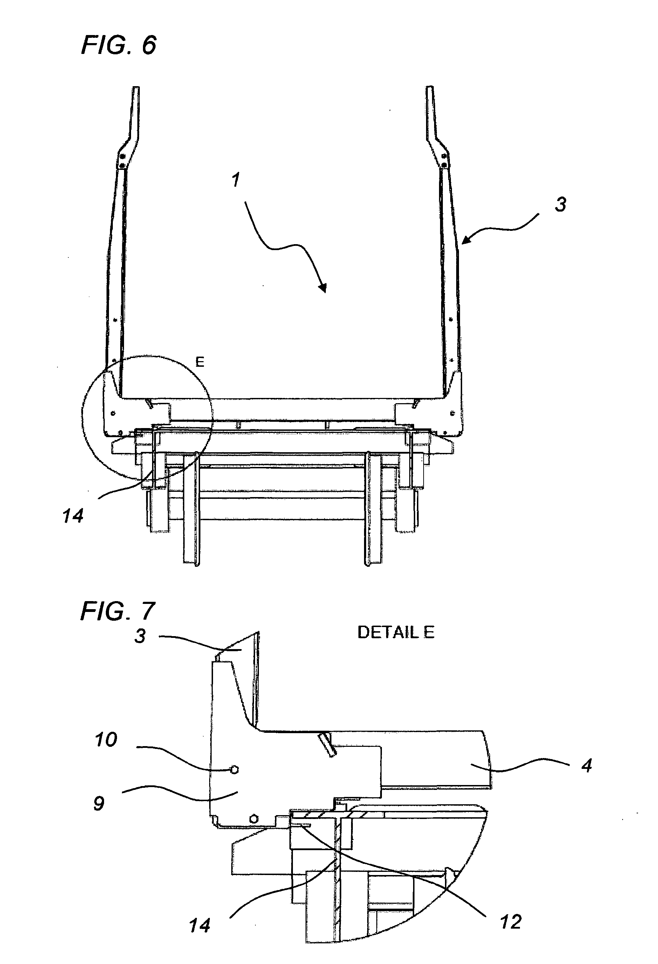

Fig. 6 zeigt die Palette 1 verladen auf einem Eisenbahnwagen 14, Fig. 7 zeigt ferner eine Rungentasche 9 mit einer mit dieser verschraubten Abhebesicherung 12, welche in bekannter Weise unter den Obergurt eines Längsträgers des Eisenbahnwagens 14 greift. Die Ausführung der Rungen 3 wird nun anhand der Fig. 2 näher erläutert. Jede Runge 3 weist einen unteren Rungenabschnitt 3a auf, welcher über eine Kröpfung 3b in einen oberen Rungenabschnitt 3c übergeht. Der untere und der obere Rungenabschnitt 3a, 3c erstrecken sich zueinander parallel bzw. im Wesentlichen parallel und senkrecht bzw. im Wesentlichen senkrecht zum Palettenrahmen bzw. zur Ladefläche 8. Die Kröpfung 3b bewirkt einen Versatz des oberen Rungenabschnittes 3c relativ zum unteren Rungenabschnitt 3a, derart, dass die paarweise den Eckbereichen eines Querträgers 4 zugeordneten Rungen 3 in Querrichtung nach innen versetzte obere Rungenabschnitte 3c aufweisen. Der Versatz a beträgt mindestens 90 mm. Die Abschnitte 3a, 3b und 3c können miteinander verschweißte Stahlprofile sein. Es kann auch vorgesehen sein, die Kröpfung 3b gemeinsam mit dem oberen Rungenabschnitt 3c als einen Teil zu fertigen und diesen mit dem unteren Rungenabschnitt 3a, beispielsweise mittels Schrauben, fest zu verbinden. Der untere Rungenabschnitt 3a erstreckt sich bis auf eine Höhe H₁, ermittelt zwischen der Oberkante des Querträgers 4 bis zum unteren Ende der Kröpfung 3b, welche zwischen 1900 mm und 2100 mm beträgt. Die Rungen 3 werden bevorzugt derart an der Palette 1 befestigt, dass ihre Rungenabschnitte 3a, 3c geringfügig um 1° bis 2° von der Senkrechten abweichend zur Querträgermitte geneigt verlaufen, um im beladenen Zustand das durch den Druck des Ladegutes verursachte geringe Auseinanderweichen der Rungen 3 auszugleichen, sodass die Rungen 3 im beladenen Zustand der Palette 1 senkrecht zur Ladefläche der Palette 1 verlaufen.

Die Länge 1 der oberen Rungenabschnitte 3c kann variiert werden, insbesondere wird jedoch die Ausführung derart getroffen, dass die Gesamthöhe Hg jeder Runge 3 - ermittelt als Normalabstand zwischen ihrer Spitze und der Oberkante des Querträgers 4 - etwa 2660 mm plus minus 200 mm beträgt.

Gemäß einer bevorzugten Ausführungsform der Erfindung sind die Rungen 3 derart ausgeführt und angeordnet, dass die unteren Rungenabschnitte 3 a der jeweils paarweise einem Querträger 4 zugeordneten Rungen 3 entsprechend dem internationalen Lademaß G1 verlaufen und insbesondere den durch diese Norm begrenzten Bauraum maximal ausnützen. Die Anordnung bzw. der Verlauf der oberen Rungenabschnitte 3c der jeweils paarweise einem Querträger zugeordneten Rungen 3 entspricht bzw. genügt der Richtlinie für die Abmessungen von intermodalen Ladeeinheiten für den Bahntransport UIC 596-6. In dieser Richtlinie ist angeführt, dass die intermodalen Ladeeinheiten Kodifizierungsschilder besitzen müssen, die Auskunft darüber geben, welche Gesamthöhe und -breite die Ladeeinheiten besitzen. Der Wagenmeister erhält daher die Information, um wie viel die jeweilige Ladeeinheit (Palette) das internationale Lademaß G1 verletzt.

Die gemäß dem internationalen Lademaß G1 relevanten Abmessungen sind wie folgt: Die maximale Breite bₘₐₓ beträgt 3.150 mm, bezogen auf den Einsatz am Containerwaggon beträgt bₘₐₓ 2.970 mm. Diese Breite gilt bis auf eine Höhe Hs von 3.175 mm über der Schienenoberkante Ks. Die maximale Breite bₘₐₓ von 3.150 mm muss wegen dem Überhang der Wagen bei Kurvenfahrt vermindert werden, der Wert von 3.150 mm gilt nur im geraden Gleis.

Die gemäß der Norm UIC 596-6 relevanten Abmessungen sind wie folgt:
Die maximale Breite biₘₐₓ von intermodalen Ladeeinheiten im Bereich der oberen Eckpunkte beträgt 2.600 mm. Der Schnittpunkt der beiden Profillinien des internationalen Lademaßes G1 und der UIC 596-6 liegt in einer Höhe H_{P} von 3.480 mm, ermittelt über der Schienenoberkante K_{S}.

Erfindungsgemäß ausgeführte Paletten 1 sind vor allem dafür geeignet und vorgesehen jenes Rundholz am Eisenbahnwagen zu transportieren, welches in Sägewerken nicht verarbeitet werden kann und an die Papier- und Zellstoffindustrie geliefert wird. Dieses Rundholz hat ein niedriges spezifisches Gewicht, das meist nicht ausreicht, um Eisenbahnwagen mit beladenen Paletten, welche die üblichen Rungensysteme aufweisen, an ihrer Lastgrenze auszulasten. Erfindungsgemäß ausgeführte Paletten können bei normgerechter Ausführung mit Rundholz derart beladen werden, dass die Eisenbahnwagen an ihrer Lastgrenze ausgelastet werden können.

Die Palette 1 kann ferner mit zusätzlichen Spannwinden für Spanngurte ausgestattet werden, um das Ladegut während des Transports entsprechend zu sichern. Die beladenen Paletten 1 können mittels eines Gabelstaplers umgeschlagen werden, wobei die Gabelzinken des Gabelstaplers gemäß der eingangs erwähnten EP-B 1 728 729 zwischen den Längsträgern und dem Rundholz positioniert werden und daher unmittelbar das Holz erfassen und gemeinsam mit der Palette anheben.

### Bezugsziffernliste

- 1: Palette
- 2: Basisteil
- 3: Runge
- 3a: unterer Rungenabschnitt
- 3b: Kröpfung
- 3c: oberer Rungenabschnitt
- 4: Querträger
- 5: Längsträger
- 6: mittlerer Querträger
- 7: Stahlblechstreifen
- 8: Stahlblechplatte
- 9: Rungenschuh
- 10: Schraube
- 10a: Mutter
- 11: Winde
- 12: Abhebesicherung
- 14: Eisenbahnwagen
- a: Versatz
- Hg: Gesamthöhe
- H₁: Höhe
- 1: Länge
- bₘₐₓ: maximale Breite
- H_{S}: Höhe
- H_{P}: Höhe
- K_{S}: Schienenoberkante
- biₘₐₓ: maximale Breite

## Patentansprüche

1. Palette (1) zum Transport von Rund- oder Schnittholz auf Eisenbahnwagen für den Containertransport mit einem formstabilen Rahmen aus Längs- und Querträgern (4, 5) aus Stahlprofilen und mit an den Eckbereichen des Rahmens angeordneten, aufrecht stehenden, aus Stahlprofilen gefertigten Rungen (3),
**dadurch gekennzeichnet,**
**dass** sich die paarweise jedem Querträger (4) zugeordneten Rungen (3) aus unteren und oberen, über eine Kröpfung (3b) verbundenen Rungenabschnitten (3a, 3c) zusammensetzen, wodurch die oberen Rungenabschnitte (3c) gegenüber den unteren Rungenabschnitten (3a) in Richtung Querträgermitte versetzt sind, derart, dass die beiden paarweise einander zugeordneten unteren Rungenabschnitte (3a) gemäß dem internationalen Lademaß G1 für Eisenbahntransporte und die beiden paarweise einander zugeordneten oberen Rungenabschnitte (3c) gemäß der internationalen Richtlinie UIC 596-6 verlaufen.

2. Palette nach Anspruch 1, **dadurch gekennzeichnet, dass** die Rungen (3) eine Gesamthöhe (H_{g}) in senkrechter Richtung, zwischen der Oberkante des Querträgers (4) und der Rungenspitze ermittelt, aufweisen, welche 2660 mm +/- 200 mm beträgt.

3. Palette nach Anspruch 1 oder 2, **dadurch gekennzeichnet, dass** der parallel zum Querträger (4) ermittelte Versatz (a) des oberen Rungenabschnittes (3c) zum unteren Rungenabschnitt (3a) mindestens 90 mm beträgt.

4. Palette nach einem der Ansprüche 1 bis 3, **dadurch gekennzeichnet, dass** der obere Rungenabschnitt (3c) mitsamt der Kröpfung (3b) als ein Teil ausgeführt ist, welcher mit dem unteren Rungenabschnitt (3a) fest verbunden ist.

5. Palette nach einem der Ansprüche 1 bis 3, **dadurch gekennzeichnet, dass** die Runge (3) einteilig ausgeführt ist und aus miteinander verschweißten Stahlprofilen besteht.

6. Palette nach einem der Ansprüche 1 bis 5, **dadurch gekennzeichnet, dass** die unteren Rungenabschnitte (3a) der paarweise einem Querträger (4) zugeordneten Rungen (3) gemäß dem internationalen Lademaß G1 derart verlaufen, dass die maximale Breite (bₘₐₓ) im Bereich der unteren Enden der unteren Rungenabschnitte (3a) der Palette 2.970 mm beträgt, wobei diese Breite bis in eine Höhe (H_{S}) von 3.175 mm über der Schienenoberkante (K_{S}) gilt.

7. Palette nach einem der Ansprüche 1 bis 5, **dadurch gekennzeichnet, dass** die oberen Rungenabschnitte (3c) der paarweise einem Querträger (4) zugeordneten Rungen (3) gemäß der internationalen Richtlinie UIC 596-6 derart verlaufen, dass die maximale Breite biₘₐₓ im Bereich der oberen Eckpunkte der Rungenabschnitte (3c) 2.600 mm beträgt.

## Claims

1. Pallet (1) for transporting round or sawn timber on railway wagons for container transport, with a dimensionally stable frame of longitudinal and transverse beams (4, 5) of steel extrusions, and with posts (3) made from steel extrusions, standing upright and placed in the corner areas of the frame,
**characterised in that**,
the posts (3) placed paired to each transverse beam (4) are made from lower and upper post sections (3a, 3c) connected through an offset bend (3b), whereby the upper post sections (3c) are offset relative to the lower post sections (3a) in the direction of the transverse beam centre, such that the two lower post sections (3a), placed paired relative to each other, perform in accordance with the International Load Gauge G1 for rail transport and the two upper post sections (3c), placed paired relative to each other, perform in accordance with the International Guide UIC 596-6.

2. Pallet as claimed in claim 1, **characterised in that** the posts (3) have a total height (Hg), calculated in the vertical direction between the upper edge of the transverse beam (4) and the tip of the post, which height amounts to 2660 mm +/- 200 mm.

3. Pallet as claimed in claim 1 or 2, **characterised in that** the offset (a), calculated parallel to the transverse beam (4), of the upper post section (3c) relative to the lower post section (3a) amounts to at least 90 mm.

4. Pallet as claimed in one of claims 1 to 3, **characterised in that** the upper post section (3c) is designed as one part together with the offset bend (3b), which part is fixedly connected to the lower post section (3a).

5. Pallet as claimed in one of claims 1 to 3, **characterised in that** the post (3) is designed as one piece and consists of steel extrusions welded together.

6. Pallet as claimed in one of claims 1 to 5, **characterised in that** the lower post sections (3a) of the posts (3), placed paired to one transverse beam (4), perform in accordance with the International Load Gauge G1 such that the maximum width (bₘₐₓ) in the area of the lower ends of the lower post sections (3a) of the pallet amounts to 2,970 mm, wherein this width applies up to a height (H_{S}) of 3,175 mm above the rail upper edge (K_{S}).

7. Pallet as claimed in one of claims 1 to 5, **characterised in that** the upper post sections (3c) of the posts (3), placed paired to one transverse beam (4), perform in accordance with the International Guide UIC 596-6, such that the maximum width biₘₐₓ in the area of the upper corner points of the post sections (3c) amounts to 2,600 mm.

## Revendications

1. Palette (1) pour le transport de bois rond ou de bois de sciage sur des véhicules ferroviaires conçus pour le transport de conteneurs, comportant un cadre rigide constitué de longerons et de traverses (4, 5) en profilés d'acier et des ranchers (3) en profilés d'acier (3), verticaux, disposés au niveau des coins du cadre,
**caractérisée en ce que**
les ranchers (3) associés par paire à chaque traverse (4) se composent de sections de rancher supérieures et inférieures (3a, 3c) reliées par l'intermédiaire d'une partie coudée (3b), par laquelle les sections de rancher supérieures (3c) sont déplacées par rapport aux sections de rancher inférieures (3a) en direction du centre des traverses, de telle sorte que les deux sections de rancher inférieures (3a) associées par paire l'une à l'autre s'étendent conformément au gabarit international de chargement G1 pour les transports ferroviaires et les deux sections de rancher supérieures (3c) associées par paire l'une à l'autre s'étendent conformément à la directive internationale de l'UIC n° 596-6.

2. Palette selon la revendication 1, **caractérisée en ce que** les ranchers (3) présentent une hauteur totale (Hg) déterminée dans la direction verticale entre le bord supérieur de la traverse (4) et le sommet du rancher, laquelle est située entre 2660 mm et +/- 200 mm.

3. Palette selon la revendication 1 ou 2, **caractérisée en ce que** le déplacement (a) déterminé de la section de rancher supérieure (3c) parallèlement à la traverse (4) est d'au moins 90 mm par rapport à la section de rancher inférieure (3a).

4. Palette selon l'une quelconque des revendications 1 à 3, **caractérisée en ce que** la section de rancher supérieure (3c) est réalisée avec la partie coudée (3b) sous forme de pièce unique, laquelle est reliée de manière fixe à la section de rancher inférieure (3a).

5. Palette selon l'une quelconque des revendications 1 à 3, **caractérisée en ce que** le rancher (3) est réalisé d'un seul tenant et se compose de profilés en acier soudés ensemble.

6. Palette selon l'une quelconque des revendications 1 à 5, **caractérisée en ce que** les sections de rancher inférieures (3a) des ranchers (3) associés par paire à une traverse (4) s'étendent conformément au gabarit international de chargement G1, de telle sorte que la largeur maximale (bₘₐₓ) est de 2970 mm au niveau des extrémités inférieures des sections de rancher inférieures (3a) de la palette, cette largeur étant valable jusqu'à une hauteur (H_{S}) de 3175 mm au-dessus de la surface des rails (K_{S}).

7. Palette selon l'une quelconque des revendications 1 à 5, **caractérisée en ce que** les sections de rancher supérieures (3c) des ranchers (3) associés par paire à une traverse (4) s'étendent conformément à la directive internationale de l'UIC n° 596-6, de telle sorte que la largeur maximale bₘₐₓ est de 2600 mm au niveau des sommets supérieurs des sections de rancher (3c).
